# EUROPÄISCHE PATENTSCHRIFT

(11) **EP 0 342 397 B1**
(45) Veröffentlichungstag und Bekanntmachung des Hinweises auf die Patenterteilung: **13.01.1993**
(21) Anmeldenummer: 89107483.3
(22) Anmeldetag: 25.04.1989
(51) Int. Cl.: C03B 37/025

(54) **Verfahren zur Herstellung einer optischen Faser hoher Festigkeit**
Method for making an optical fibre with a high resistance
Procédé de fabrication d'un fibre optique à haute résistance

(30) Priorität: 20.05.1988 DE 3817330
(43) Veröffentlichungstag der Anmeldung: 23.11.1989
(73) Patentinhaber: SIEMENS AKTIENGESELLSCHAFT, 80333 München (DE)
(72) Erfinder: Schneider, Hartmut, Dr., D-8000 München 81 (DE); Staudt, Armin, D-8000 München 2 (DE)

(56) Entgegenhaltungen:
- EP-A- 0 103 441
- EP-A- 0 161 999
- WO-A-86/04048
- DE-A- 3 701 977
- GB-A- 2 164 033
- GB-A- 2 179 342
- PATENT ABSTRACTS OF JAPAN, Band 12, Nr. 410 (C-540), 28. Oktober 1988; & JP-A-63 147 842 (NT &T CORP.) 20-06-1988
- PATENT ABSTRACTS OF JAPAN, Band 10, Nr. 226 (C-364), 7. August 1986; & JP-A-61 063 538 (KOKUSAI DENSHIN DENWA CO., LTD) 01-04-1986
- ELECTRONICS LETTERS, Band 22, nr, 18, 28. August 1986, Seiten 949-950; B.I. MILLER et al.: "Dv/dt dependence in metal oxide varistors"

## Beschreibung

Die Erfindung betrifft ein Verfahren zur Herstellung einer optischen Faser hoher Festigkeit nach dem Oberbegriff des Patentanspruchs 1.

Ein Verfahren dieser Art ist in der DE 37 01 977 A1 vorgeschlagen. Bei diesem Verfahren wurden mit einem Trocknungsmittel aus Thionylchlorid, also einem chlorhaltigen Trocknungsmittel, Fasern mit hohen Festigkeiten um 600 MPa herum erreicht.

Aus der GB-A-21 79 342 ist ein Verfahren zur Herstellung einer Vorform aus Fluoridglas, insbesondere aus Schwermetallfluoridglas, durch Ziehen von einer Glasmasse bekannt, wobei während des Ziehvorganges die frisch gezogene Faservorform und die Glasmasse von einer trockenen Gasatmosphäre umgeben wird, die ein mit Feuchte reagierendes Trocknungsmittel enthält, wobei das Trocknungsmittel NF₃ aufweist oder allein aus NF₃ besteht. Aus der so hergestellten Vorform können Fasern mit mechanischer Festigkeit gezogen werden.

Aus der GB-A-21 64 033 ist ein Verfahren zur Reinigung einer Fluoridglasmasse, insbesondere eine ZBLAN-Glasmasse, für die Herstellung einer infrarotdurchlässigen optischen Faser bekannt, wobei die Glasmasse mit einer NF-3-Gasatmosphäre reagiert, um der Fluoridglasmasse Feuchtigkeit zu entziehen.

Aufgabe der Erfindung ist es, einen Weg aufzuzeigen, auf dem Fasern mit im Vergleich zu den genannten bisherigen Festigkeiten wesentlich höheren Festigkeiten erhalten werden können.

Diese Aufgabe wird mit einem Verfahren der eingangs genannten Art dadurch gelöst, daß gemäß dem kennzeichnenden Teil des Patentanspruchs 1 als Trocknungsmittel ein fluorhaltiges Trocknungsmittel verwendet wird.

Mit dem erfindungsgemäßen Verfahren lassen sich Fasern mit mitleren Festigkeiten von 1200 MPa und mehr erhalten. Dies sind Werte, die mindestens doppelt so groß sind, wie der genannte bisherige Wert von 600 MPa. Über solch hohe Werte von 1200 MPa und mehr ist bei Fasern, die nach einem Verfahren der eingangs genannten Art hergestellt worden sind, noch nie berichtet worden.

Es sei darauf hingewiesen, daß in der DE 37 01 977 A1 zwar bereits die Verwendung von fluorhaltigen Trocknungsmitteln gleichrangig neben anderen Trocknungsmitteln in Erwägung gezogen worden ist, jedoch fehlt jeglicher Hinweis darauf, daß gerade mit diesen fluorhaltigen Trocknungsmitteln so überraschend hohe Zugfestigkeiten erreicht werden können, die weit über die mit anderen Trocknungsmitteln, beispielsweise mit chlorhaltigen Trocknungsmitteln erwart- oder erreichbaren Zugfestigkeiten hinausgehen.

Im nachhinein betrachtet, könnte eine Erklärung für die Erreichung dieser überraschend hohen Zugfestigkeiten die sein, daß ein fluorhaltiges Trocknungsmittel, insbesondere bei hohen Temperaturen, nicht nur die Glasoberfläche und die Atmosphäre trocknen, sondern auch, im Gegensatz von z. B. Thionylchlorid, die Glasoberfläche nachfluorieren kann. Dadurch kann eine Oberflächenkristallisation unterdrückt werden, die ZrO₂ ergibt.

Ein besonders bevorzugtes Trocknungsmittel weist NF₃ auf (Anspruch 2) oder besteht allein aus NF₃ (Anspruch 3), das insbesondere auch im Hinblick auf seine Applikationsfreudigkeit günstig ist. Mit diesem Trocknungsmittel können Fasern mit einer Festigkeit von mehr als 1200 MPa erhalten werden, insbesondere mit ZBLA-Gläsern (Anspruch 4) und ZBLAN-Gläsern (Anspruch 6), wobei ZBLA für ZrF₄ . BaF₂ . LaF₃ . AlF₃ und ZBLAN für ZrF₄ . BaF₂ . LaF₃ . AlF₃ . NaF steht. Diese Gläser sind auch bei Verwendung anderer fluorhaltiger Trocknungsmittel geeignet.

Eine geeignete Komposition eines ZBLA-Glases ist im Anspruch 5 und die eines ZBLAN-Glases ist im Anspruch 7 angegeben.

Besonders günstig ist es, die hergestellte Faser noch gemäß Anspruch 8 mit einem Ätzmittel zu ätzen, insbesondere mit einer ZrOCl₂-Lösung (Anspruch 9).

Die Erfindung wird anhand der Figuren in der folgenden Beschreibung beispielhaft näher erläutert. Von den Figuren zeigen:
- Figur 1: in schematischer Darstellung eine Vorrichtung zum Ziehen von Fasern in einer Gasatmosphäre, die ein mit Feuchte reagierendes Trocknungsmittel enthält, und
- Figur 2: in einer grafischen Darstellung die Biegfestigkeit von durch erfindungsgemäße Verfahren hergestellten Fasern aus ZBLA- und ZBLAN-Glas im Vergleich zu ohne Trocknungsmittel hergestellten Fasern.

Es wurden Vorformen aus ZBLA- und ZBLAN-Glas auf dem üblichen Weg aus hochreinen Fluoridmaterialien hergestellt, die in glasartigen Karbontiegeln in einer SF₆- oder NF₃-Atmosphäre geschmolzen wurden. Diese Vorformen wurden vor dem Ziehen von Oberflächenkristalliten befreit, die gewöhnlich in Kontakt mit der Gußform wachsen. Zu diesem Zweck wurde eine ZROCl₂-Ätzlösung verwendet, wie es beispielsweise in Electron. Lett., 1986, 22, S. 949 beschrieben ist. Die Vorformen hatten einen Durchmesser von 10 mm und eine Länge von 150 mm und wurden mit einer Geschwindigkeit von 7 cm/s zu Fasern mit einem Durchmesser von 140 µm ± 3 µm gezogen, indem eine Kraft von etwa 0,2 N ausgeübt wurde. Dazu wurde ein Ofen mit einem mit Hochfrequenz beheizten Kohlesuszeptor benutzt, der mit N₂ oder einer Mischung aus N₂ und NF₃ gespült wurde.

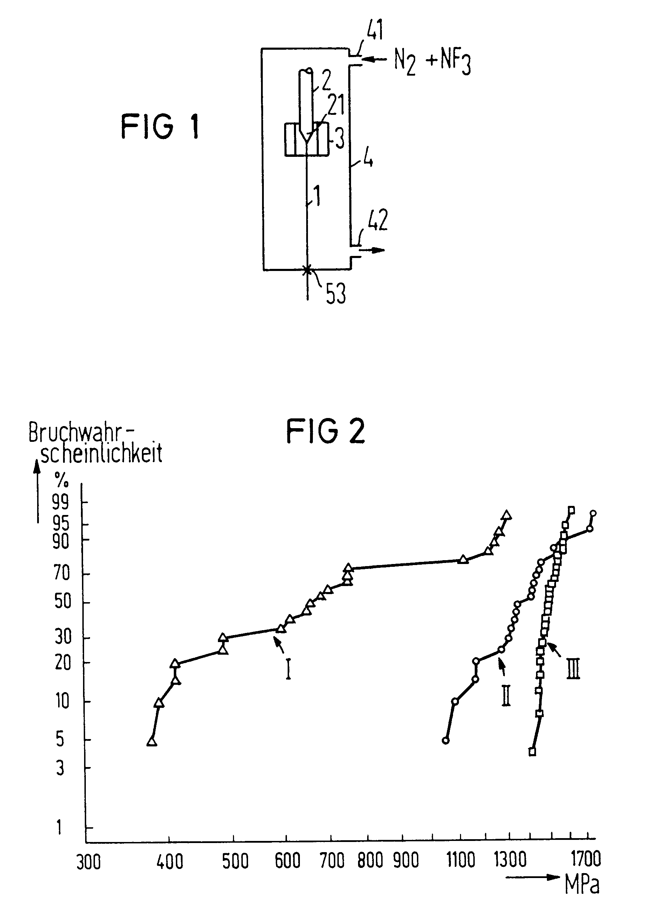

Eine beispielhafte Vorrichtung zur Durchführung des Ziehverfahrens ist in der Figur 1 dargestellt. Danach wird das untere Ende 21 der stabförmigen Vorform 2 aus ZBLA- oder ZBLAN-Glas durch den Ofen 3 thermisch erweicht und von dem erweichten Ende 21 vertikal nach unten die Faser 1 abgezogen.

Die Vorform 2 und der Ofen 3 sind in einem geschlossenen Behälter 4 mit einem beispielsweise oberen Gaseinlaß 41 und einem beispielsweise hinteren Gasauslaß 42 angeordnet. Im Boden des Behälters 4 ist eine Öffnung 53 vorgesehen, durch welche die Faser 1 gezogen wird.

Durch den Gaseinlaß 41 wird trockener Stickstoff N₂ oder ein Gemisch aus trockenem Stickstoff N₂ und NF₃ als Beispiel für das mit Feuchte reagierende fluorhaltige Trockenmittel eingeleitet, wobei der Stickstoff bzw. das Gemisch am unteren Gasauslaß 42 wieder abgesaugt werden kann. Dadurch können die Vorform 2 und während des Ziehvorganges auch die frisch gezogene Faser 1 von einer trockenen Gasatmosphäre umgeben werden, die das mit Feuchte reagierende, fluoridhaltige Trocknungsmittel enthält.

In der Figur 2 ist der Verlauf der die Bruchwahrscheinlichtkeit von Fasern, die in einer Gasatmosphäre mit und ohne fluorhaltiges Trocknungsmittel gezogen worden sind, über der Biegefestigkeit aufgetragen. Die Kurve I bezieht sich auf Fasern, die in reinem N₂ gezogen worden sind. Die Kurve II betrifft Fasern, die in einem Gemisch aus Stickstoff und NF₃ gezogen worden sind, während sich die Kurve III auf Fasern bezieht, die in dem gleichen Gemisch gezogen worden sind, jedoch nach der Herstellung noch geätzt worden sind.

Aus der Darstellung der Figur 2 ist ersichtlich, daß beim Ziehen der Fasern in einer ein fluorhaltiges Trocknungsmittel enthaltenden Gasatmosphäre Fasern mit einer beträchtlich höheren Festigkeit erhalten werden als sie beim Ziehen von Fasern in einer kein fluorhaltiges Trocknungsmittel enthaltenden Gasatmosphäre erhalten wird. Durch die Behandlung mit dem fluorhaltigen Trocknungsmittel werden Defekte, die zu einer niedrigen Festigkeit führen, weitgehend beseitigt.

Die Figur 2 bezieht sich speziell auf Fasern aus ZBLA-Glas. Wie der Figur 2 zu entnehmen ist, beträgt die mittlere Biegfestigkeit nach Kurve I etwa 700 MPa. Die mittlere Biegfestigkeit der Fasern nach Kurve II ist mit 1400 MPa bereits doppelt so hoch. Demgegenüber beträgt die mittlere Biegfestigkeit der Fasern nach Kurve III etwa 1600 MPa und ist noch besser.

Die gleiche Verbesserung der Biegfestigkeit auf das doppelte und mehr wird bei Fasern aus ZBLAN-Glas beobachtet, wie die folgende Tabelle zeigt:

**Tabelle**

| Glaszusammensetzung | Atmosphäre | Präparation | Faserdurchmesser (µm) | mittlere Biegfestigkeit (MPa) |
|---|---|---|---|---|
| ZBLA | N₂ | nicht geätzt | 140 | 728±306 |
| ZBLA | N₂+NF₃ | nicht geätzt | 140 | 1400±185 |
| ZBLA | N₂+NF₃ | geätzt | 80 | 1585± 60 |
| ZBLAN | N₂ | nicht geätzt | 141 | 553±146 |
| ZBLAN | N₂+NF₃ | nicht geätzt | 143 | 852±107 |
| ZBLAN | N₂+NF₃ | geätzt | 95 | 1140± 29 |
| ZBLAN | N₂+NF₃ | nicht geätzt | 133 | 803±176 |
| (Kern-Mantel-Faser) | N₂+NF₃ | geätzt | 107 | 1123± 36 |

Es sei darauf hingewiesen, daß nach dieser Tabelle Kern-Mantel-Fasern von nur geringfügig niedrigerer Festigkeit gezogen worden sind, obwohl an der Grenzfläche zwischen dem Kern- und Mantelglas eine erhöhte innere Kristalldichte beobachtet worden ist.

Beste Werte für die Biegfestigkeit wurden mit dem erfindungsgemäßen Verfahren bei Fasern aus ZBLA-Glas erhalten und betrugen bis zu 1800 MPa.

## Patentansprüche

1. Verfahren zur Herstellung einer optischen Faser (1) hoher Zugfestigkeit aus Halogenidglas, insbesondere einer infrarotdurchlässigen Faser aus Schwermetallfluoridglas, durch Ziehen von einer Glasmasse (2) in einer Gasatmosphäre, wobei entweder die Faser (1) oder die Faser (1) und die Glasmasse (2) von einer trockenen Gasatmosphäre umgeben wird, die ein mit Feuchte reagierendes Trocknungsmittel enthält, **dadurch gekennzeichnet,** daß als Trocknungsmittel ein fluorhaltiges Trocknungsmittel verwendet wird.

2. Verfahren nach Anspruch 1, **dadurch gekennzeichnet,** daß das Trocknungsmittel den chemischen Stoff NF₃ aufweist.

3. Verfahren nach Anspruch 2, **dadurch gekennzeichnet,** daß das Trocknungsmittel allein aus NF₃ besteht.

4. Verfahren nach einem der vorhergehenden Ansprüche, insbesondere nach Anspruch 2 oder 3, **dadurch gekennzeichnet,** daß das Halogenidglas ein ZBLA-Glas ist.

5. Verfahren nach Anspruch 4, **dadurch gekennzeichnet,** daß das ZBLA-Glas aus 57 Mol.% ZrFr₄, 34 Mol.% BaF₃, 5 Mol.% LaF₃ und 4 Mol.% AlF₃ zusammengesetzt ist.

6. Verfahren nach einem der Ansprüche 1 bis 3, insbesondere nach Anspruch 2 oder 3, **dadurch gekennzeichnet,** daß das Halogenidglas ein ZBLAN-Glas ist.

7. Verfahren nach Anspruch 6, **dadurch gekennzeichnet,** daß das ZBLAN-Glas aus 53 Mol.% ZrF₄, 20 Mol.% BaF₂, 4 Mol.% LaF, 3 Mol.% AlF₃ und 20 Mol.% NaF zusammengesetzt ist.

8. Verfahren nach einem der vorhergehenden Ansprüche, **dadurch gekennzeichnet,** daß die hergestellte Faser mit einem Ätzmittel geätzt wird.

9. Verfahren nach Anspruch 8, **dadurch gekennzeichnet,** daß die Faser mit einer ZrOCl₂-Lösung geätzt wird.

## Claims

1. Process for producing an optical fibre (1) having high tensile strength and composed of halide glass, in particular an infrared-transparent fibre composed of heavy-metal fluoride glass, by pulling a glass substance (2) in a gas atmosphere, either the fibre (1) or the fibre (1) and the glass substance (2) being surrounded by a dry gas atmosphere which contains a drying agent which reacts with moisture, characterised in that a fluorine-containing drying agent is used as drying agent.

2. Process according to Claim 1, characterised in that the drying agent incorporates the chemical substance NF₃.

3. Process according to Claim 2, characterised in that the drying agent is composed solely of NF₃.

4. Process according to one of the preceding claims, in particular according to Claim 2 or 3, characterised in that the halide glass is a ZBLA glass.

5. Process according to Claim 4, characterised in that the ZBLA glass is composed of 57 mol.% of ZrF₄, 34 mol.% of BaF₂, 5 mol.% of LaF₃ and 4 mol.% of AlF₃.

6. Process according to one of the Claims 1 to 3, in particular according to Claim 2 or 3, characterised in that the halide glass is a ZBLAN glass.

7. Process according to Claim 6, characterised in that the ZBLAN glass is composed of 53 mol.% of ZrF₄, 20 mol.% BaF₂, 4 mol.% of LaF₃, 3 mol.% of AlF₃ and 20 mol.% of NaF.

8. Process according to one of the preceding claims, characterised in that the fibre produced is etched with an etchant.

9. Process according to Claim 8, characterised in that the fibre is etched with a ZrOCl₂ solution.

## Revendications

1. Procédé pour fabriquer une fibre optique (1) présentant une résistance élevée à la traction, en un verre à base d'un halogénure, notamment une fibre transmettant le rayonnement infrarouge et formée par un verre à base de fluorure d'un métal lourd, par tirage d'une masse de verre (2) dans une atmosphère de gaz, la fibre (1) ou la fibre (1) et la masse de verre (2) étant entourée(s) par une atmosphère de gaz sèche, qui contient un produit siccatif réagissant à l'humidité, caractérisé par le fait qu'on utilise comme produit siccatif un produit siccatif fluoré.

2. Procédé suivant la revendication 1, caractérisé par le fait que le produit siccatif contient la substance chimique F₃.

3. Procédé suivant la revendication 2, caractérisé par le fait que le produit siccatif est constitué uniquement par du NF₃.

4. Procédé suivant l'une des revendications précédentes, notamment la revendication 2 ou 3, caractérisé par le fait que le verre a base d'halogénure est un verre ZBLA.

5. Procédé suivant la revendication 4, caractérisé par le fait que le verre ZBLA est constitué par 57 % en moles de ZrFr₄, 34 % en moles de BaF₃, 5 % en moles de LaF₃ et 4 % en moles de AlF₃.

6. Procédé suivant l'une des revendications 1 à 3, notamment suivant la revendication 2 ou 3, caractérisé par le fait que le verre à base d'halogénure est un verre ZBLAN.

7. Procédé suivant la revendication 6, caractérisé par le fait que le verre ZBLAN est constitué par 53 % en moles ZrF₃, 20 % en moles de BaF₂, 4 % en moles de LaF, 3 % en moles de AlF₃ et 20 % en moles de NaF.

8. Procédé suivant l'une des revendications précédentes, caractérisé par le fait qu'on corrode la fibre fabriquée, à l'aide d'un agent corrosif.

9. Procédé suivant la revendication 8, caractérisé par le fait qu'on corrode la fibre avec une solution de ZrOCl₂.
